# EUROPÄISCHE PATENTANMELDUNG

(11) **EP 2 124 029 A2**
(43) Veröffentlichungstag der Anmeldung: **25.11.2009**
(21) Anmeldenummer: 09006744.8
(22) Anmeldetag: 19.05.2009
(51) Int. Cl.: G01L 1/22

(54) **Vorrichtung zur Vermeidung einer negativen Last bei einem Lastmessbolzen**

(30) Priorität: 19.05.2008 DE 102008024160
(71) Anmelder: Hirschmann Automation and Control GmbH, 72654 Neckartenzlingen (DE)
(72) Erfinder: Kettenbach, Helmuth, 79275 Ettlingen (DE); Petrak, Leo, 76359 Marxzell (DE); Schuh, Michael, 76764 Rheinzabern (DE)
(74) Vertreter: Greif, Thomas

(57) **Zusammenfassung**

Die Erfindung betrifft zur Vermeidung einer negativen Last bei einem Lastmessbolzen einen Lastmessbolzen (1) zur Messung von Lasten oder Kräften, wobei der Lastmessbolzen (1) mittels eines Innenlagers (40) und Außenlagern (50, 60) drehbar gelagert ist und eine Messvorrichtung aufweist, die aufgrund der auf den Lastmessbolzen (1) einwirkenden Lasten oder Kräften eine Durchbiegung erfasst und in Abhängigkeit dessen ein elektrisches Signal erzeugt, wobei zur gezielten Durchbiegung des Lastmessbolzens (1) zwischen dem Innenlager (40) und den Außenlagern (50, 60) Messnuten (8, 9) im Lastmessbolzen (1) vorgesehen sind, wobei erfindungsgemäß vorgesehen ist, dass sich das Außenlager (50, 60) in Längsrichtung in Richtung des Innenlagers (40) zumindest teilweise über die Messnut (8, 9) erstreckt und in dem Bereich, in dem sich das Außenlager (50, 60) über die Messnut (8, 9) erstreckt, der Durchmesser des Außenlagers (50, 60) für den Lastmessbolzen (1) teilweise gleich und teilweise größer ist als der Außendurchmesser des Lastmessbolzens (1).

## Beschreibung

Die Erfindung betrifft einen Lastmessbolzen zur Messung von Lasten oder Kräften, wobei der Lastmessbolzen mittels eines Innenlagers und Außenlagern drehbar gelagert ist und eine Messvorrichtung aufweist, die aufgrund der auf den Lastmessbolzen einwirkenden Lasten und Kräften eine Durchbiegung erfasst und in Abhängigkeit dessen ein elektrisches Signal erzeugt, wobei zur gezielten Durchbiegung des Lastmessbolzen zwischen dem Innenlager und den Außenlagern Messnuten im Lastmessbolzen vorgesehen sind, gemäß den Merkmalen des Oberbegriffes des Patentanspruches 1.

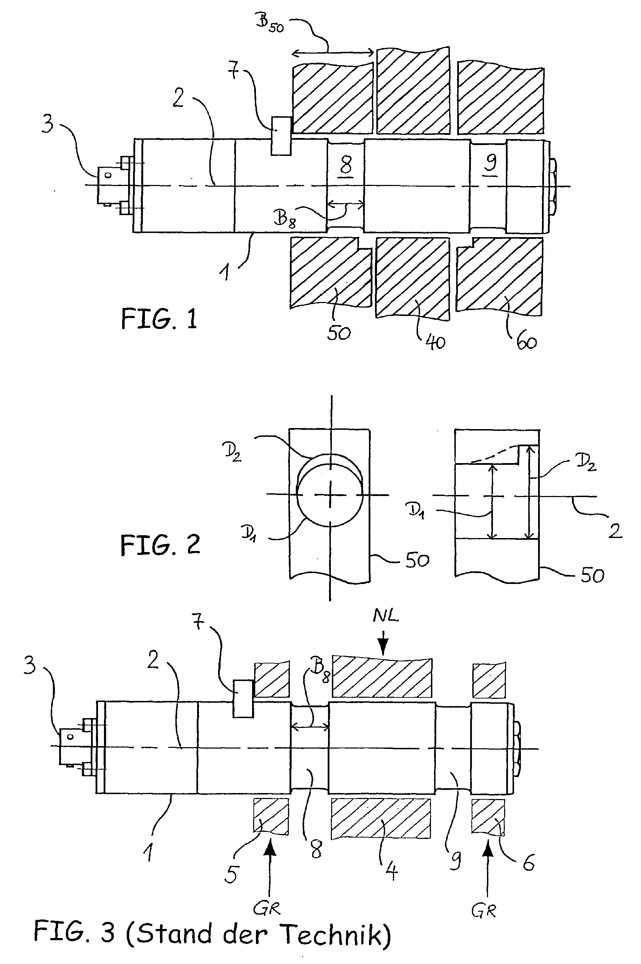

Ein Ausführungsbeispiel eines bekannten Lastmessbolzens ist in Figur 3 (Stand der Technik) dargestellt und im Folgenden beschrieben. Ein Lastmessbolzen 1 mit einer Längsachse 2 weist an seinem einen Ende einen Stecker 3 auf, an dem ein elektrisches Signal bei Belastung des Lastmessbolzens 1 in etwa senkrecht zu der Längsachse 2 ausgekoppelt und durch nachfolgende Auswerteeinrichtungen ausgewertet und dargestellt werden kann. Der Lastmessbolzen 1 ist zum einen in einem Innenlager 4 und zum anderen in Außenlagern, nämlich einem linken Außenlager 5 und einem rechten Außenlager 6 gelagert. Der Innendurchmesser der Lager 4, 5 und 6 ist dabei so gewählt, dass er nahezu dem Außendurchmesser des Lastmessbolzens 1 entspricht. Obwohl in den Figuren zwischen dem Außendurchmesser des Lastmessbolzens 1 und den Innendurchmessern der Lager 4, 5 und 6 ein Spalt vorhanden zu sein scheint, ist dieser in der Praxis nicht vorhanden, so dass der Lastmessbolzen 1 in den Lagern 4 bis 6 möglichst spielfrei gelagert ist. Um ein axiales Verschieben des Lastmessbolzens 1 relativ zu den Lagern 4 bis 6 zu verhindern, ist ein Bolzenhalter 7 angedeutet. Zur gezielten Messung einer auf den Lastmessbolzen 1 wirkenden Nennlast NL (in Messrichtung) sind Messnuten 8, 9 vorhanden, die eine entsprechende Breite (z.B. Breite B₈ bei der Messnut 8, wobei die Breiten der Messnuten 8, 9 vorzugsweise gleich groß sind, aber nicht sein müssen) aufweisen. Bei Einwirkung einer Nennlast NL auf den Lastmessbolzen 1 wird eine wenn auch nur geringfügige Durchbiegung des Lastmessbolzens 1 im Bereich der Messnuten 8, 9 z.B. mittels einer Dehnungsmessstreifen-Brücke erfasst und kann ausgewertet werden. Bei Einwirkung der Nennlast NL auf den Lastmessbolzen 1 kann sich dieser im Bereich der Messnuten 8, 9 gezielt durchbiegen und stützt sich gleichsam auf den Außenlagern 5, 6 in Gegenrichtung GR ab.

Die Ausgestaltung eines bekannten Lastmessbolzens 1, wie er in Figur 3 dargestellt ist, funktioniert grundsätzlich zufriedenstellend. Eine solche Ausgestaltung hat jedoch den Nachteil, dass nur dann eine korrekte Auswertung der Nennlast NL zustande kommt, wenn diese Nennlast aus einer definierten Richtung kommt. Eine Last bzw. eine Stoßlast, die aus der Gegenrichtung kommt, würde zu einer negativen Last bei dem Lastmessbolzen 1 führen und damit auch ein verfälschtes Signal erzeugen.

Der Erfindung liegt daher die Aufgabe zugrunde, einen Lastmessbolzen und seine Anordnung so auszugestalten, dass der Lastmessbolzen nur in eine Richtung belastet werden kann und eine Last bzw. Stoßlast in Gegenrichtung zur Vermeidung einer negativen Last vermieden wird.

Diese Aufgabe ist durch die Merkmale des Patentanspruches 1 gelöst.

Erfindungsgemäß ist vorgesehen, dass sich das Außenlager, vorzugsweise beide Außenlager, in Längsrichtung in Richtung des Innenlagers zumindest teilweise über die Messnut erstreckt und in den Bereich, in dem sich das Außenlager über die Messnut erstreckt, der Durchmesser des Außenlagers für den Lastmessbolzen teilweise gleich und teilweise größer ist als der Außendurchmesser des Lastmessbolzens. Das bedeutet, dass der Innendurchmesserbereich des Außenlagers so gestaltet ist, dass sich der darin gelagerte Lastmessbolzen in einer Richtung, und zwar in Richtung der Beaufschlagung mit der Nennlast, nach wie vor und in an sich bekannter Weise gezielt durchbiegen kann, wohingegen bei Belastungen aus anderen Richtungen als aus Richtung der Nennlast sich der Lastmessbolzen auf dem Außenlager oder auf den Außenlagern abstützen kann. Somit ist das (jeweilige) Außenlager zur rotatorischen Lagerung des Lastmessbolzens so gestaltet, dass es Bereiche aufweist, in denen sich der Lastmessbolzen gezielt durchbiegen kann, und Bereiche aufweist, in denen sich der Lastmessbolzen bei auf ihn wirkenden Lasten oder Kräften aus anderer Richtung gezielt abstützen kann. Die nach innen weisenden Auflageflächen der Außenlager für den Lastmessbolzen sind also so gestaltet, dass sie sich in Gegenlastrichtung über die Messnut hinaus verbreitern, genauer aufweiten, so dass eine Durchbiegung oder Scherbelastung der Messnut verhindert wird.

Ein Ausführungsbeispiel einer erfindungsgemäßen Anordnung mit einem Lastmessbolzen ist in den Figuren 1 und 2 gezeigt und im Folgenden beschrieben.

Figur 1 zeigt im Schnitt im Wesentlichen eine Anordnung, wie sie bekannt ist. Diesbezüglich wird auf die vorangegangene Beschreibung zu der Figur 3 verwiesen. Erfindungsgemäß kommt wiederum ein Lastmessbolzen 1 zum Einsatz, der Messnuten 8, 9 mit definierter Breite (B₈, wobei gleiches auch für die Messnut 9 gilt) aufweist. In diesem Fall ist die Breite des Innenlagers 40 etwas kleiner gewählt als die Breite des Innenlagers 4 beim Stand der Technik, wohingegen die Breite B₅₀ der beiden Außenlager 50, 60 zum einen größer gewählt ist als die Breite der Außenlager 5, 6 im Stand der Technik. Das bedeutet mit Blick auf die Figur 1, dass sich das Außenlager 50, 60 in Längsrichtung in Richtung des Innenlagers 40 zumindest teilweise über die Messnut 8, 9, vorzugsweise über die gesamte Breite der Messnut 8, 9, bis in den Bereich des Innenlagers 40 hinein, erstreckt. Zum anderen ist die Innenkontur der Außenlager 50, 60 zur rotatorischen Aufnahme des Lastmessbolzens 1 auf eine besondere Art und Weise ausgestaltet, nämlich dadurch, dass der Innendurchmesser des Außenlagers 50, 60 für den Lastmessbolzen 1 teilweise gleich und teilweise größer ist als der Außendurchmesser des Lastmessbolzens 1. Dies wird mit Blick auf die Draufsicht und den Schnitt durch das linke Außenlager 50, wie es in Figur 2 dargestellt ist, deutlich. Dabei ist erkennbar (rechte Darstellung der Figur 2), dass der Innendurchmesser des Außenlagers 50 teilweise gleich (Durchmesser D₁) und teilweise größer (Durchmesser D₂) ist als der hier nicht dargestellte Außendurchmesser des Lastmessbolzens 1. Das bedeutet, dass der Lastmessbolzen 1 im Bereich der Öffnung des Außenlagers 50 mit dem Durchmesser D₁ gelagert ist, wobei er sich in dem Bereich mit dem Durchmesser D₂ in der einen Richtung nach wie vor auf dem Außenlager 50 abstützen kann, aber bei Krafteinwirkung aus der anderen Richtung sich (hier aufgrund der Aufweitung der Öffnung für den Lastmessbolzen 1 bei Betrachtung der Figur 2 nach oben) gezielt durchbiegen kann. Das bedeutet konkret bei Betrachtung der Figur 2, dass eine von unten nach oben wirkende Nennlast NL bewirkt, dass sich der hier nicht dargestellte Lastmessbolzen 1 mit seinen Messnuten 8, 9 gezielt im Durchmesser größeren Bereich durchbiegen kann. Wirkt jedoch eine Last oder Kraft aus der anderen Richtung (bei Betrachtung der Figur 2 von oben), kann sich der Lastmessbolzen 1 durchgehend auf der Auflagefläche, die in Längsrichtung der Längsachse 2 gleichbleibt, vollständig abstützen, so dass in diesem Fall eine Durchbiegung und damit einhergehend eine negative Last vermieden wird. Dies hat den großen Vorteil, dass eine solche Anordnung zum Einsatz bei einer Messachse (Lastmessbolzen) kommen kann, die nur in eine Richtung belastet werden darf. Die Erfassung einer Last bzw. Stoßlast in Gegenrichtung kann durch diese Anordnung vermieden werden.

Wie den Darstellungen der Figur 2 zu entnehmen ist, weitet sich der Innendurchmesser des Außenlagers 50 (genauso wie des Außenlagers 60) in Längsrichtung der Längsachse 2 auf, wobei diese Aufweitung in vorteilhafter Weise kontinuierlich oder sprunghaft erfolgen kann. Die sprunghafte Aufweitung von dem Innendurchmesser D₁ zu dem Innendurchmesser D₂ hat den Vorteil, dass ein kleiner, aber definierter und damit scharf abgegrenzter Durchbiegungsbereich für den Lastmessbolzen 1 definiert ist. Anstelle dessen hat die kontinuierliche Aufweitung von dem Innendurchmesser D₁ hin zu dem größeren Innendurchmesser D₂ hat den Vorteil, dass insbesondere bei sprunghaften Änderungen der Nennlasten bzw. Lasten oder Kräften aus der Gegenrichtung keine sprunghaft ansteigenden Materialbelastungen erfolgen, so dass durch die kontinuierliche Aufweitung die Dauerhaltbarkeit einer solchen Anordnung gefördert wird.

Weiterhin ist erfindungsgemäß vorgesehen, dass unterhalb einer gedachten Ebene, die durch die Längsachse 2 verläuft, über die gesamte Breite B₅₀ (analog auch B₆₀) der Durchmesser D₁ so gewählt ist, dass er immer gleich bleibt über den Verlauf der Erstreckung des Außenlagers 50, 60 über die jeweilige Breite. Oberhalb der gedachten Ebene, die durch die Längsachse 2 verläuft, weitet sich die Öffnung der Bohrung für den Lastmessbolzen 1 vom Durchmesser D₁ hin zum Durchmesser D₂ auf, wobei diese Aufweitung sprunghaft oder kontinuierlich erfolgt. Insbesondere bei der kontinuierlichen Aufweitung verläuft die Innenform der Öffnung für den Lastmessbolzen 1 ausgehend vom Durchmesser D₁ hin zum Durchmesser D₂ auf der gegenüberliegenden Seite trompeten- oder ellipsenförmig oberhalb der durch die Längsachse 2 gehende Ebene. Das bedeutet, dass der eine Teil, vorzugsweise der hälftige Teil der Durchgangsöffnung für den Lastmessbolzen 1, eine durchgehende zylindrische Form (Halbzylinder) aufweist, wobei der andere Teil, insbesondere die andere Hälfte der Durchgangsbohrung für den Lastmessbolzen 1 eine kontinuierliche oder sprunghafte Aufweitung erfährt. Bevorzugt ist die eine Hälfte der Durchgangsbohrung halbzylinderförmig und die andere Hälfte mit einer Aufweitung versehen, wobei auch andere Verhältnisse von oberen und unteren Teil denkbar sind. So kann beispielsweise der zylinderförmige Teil, der der Abstützung des Lastmessbolzens 1 bei einer Kraftbeaufschlagung dient, wobei die Kraft aus der nicht erwünschten Richtung (Gegenrichtung, in die nicht gemessen werden soll) dient. Dabei ist es aber auch denkbar, zur Abstützung diesen zylinderförmigen Teil der Durchgangsbohrung für den Lastmessbolzen 1 größer als die Hälfte, vorzugsweise 2/3 oder bis zu 80% der Umfangsrichtung der Durchgangsbohrung, zylinderförmig auszugestalten, wobei dann der übrige Umfangsbereich der Durchgangsbohrung die Aufweitung aufweist. Die in Längsrichtung betrachtet vorhandenen Übergangsbereiche von der Zylinderform der Durchgangsbohrung hin zu der aufgeweiteten Innenform verlaufen gleichmäßig und glattförmig und haben keine Sprünge, Durchmesseränderungen oder dergleichen, um eine optimale Lagerung des Lastmessbolzens 1 in dem Außenlager 50, 60 zu gewährleisten. Die Begriffe "oberhalb" und "unterhalb" beziehen sich auf die Richtungen, aus denen die Last wirkt und sind somit nicht auf eine vertikale Betrachtung beschränkt.

Die vorstehend beschriebene und in den Figuren 1 und 2 gezeigte Anordnung kann ohne weiteres abgewandelt werden, ohne dass der Erfindungsgedanke verlassen wird. Insbesondere ist es denkbar, den in Figur 1 dargestellten symmetrischen Aufbau der Lager 40 bis 60 relativ zu den Messnuten 8, 9 derart abzuwandeln, dass sich ein asymmetrischer Aufbau ergibt, z. B. können die Breiten der Außenlager 50, 60 voneinander unterschiedlich sein, genauso wie die Breiten der beiden Messnuten 8, 9 identisch oder voneinander abweichend sein können.

Der Vollständigkeit halber sei erwähnt, dass in dem Lastmessbolzen 1, der einen runden Querschnitt und in seinem Inneren einen nicht dargestellten Hohlraum aufweist, in an sich bekannter Weise Dehnungsmessstreifen angeordnet sind. Die Dehnungsmessstreifen, die beispielsweise als Draht- oder Folien-Drahtmessstreifen ausgebildet sein können, bilden einen elektrischen Widerstand, wobei die einzelnen Widerstandsdrähte bzw. Widerstandsfolien auf einer Trägerschicht angeordnet sind, wobei die Trägerschicht wiederum im Bereich der Messnuten innen im Inneren des Lastmessbolzens 1 befestigt, z. B. auf der inneren Oberfläche aufgeklebt sind. Die im Lastmessbolzen erzeugte Dehnung wird über den Träger des Dehnungsmessstreifens übertragen. Dadurch erfährt der Dehnungsmessstreifen eine Längenänderung, die bedingt ist durch die Durchbiegung des Lastmessbolzens bei Kraft- oder Lasteinwirkung, wobei diese Durchbiegung sich wiederum in einer Widerstandsänderung bemerkbar macht. Diese Widerstandsänderung ist folglich direkt proportional der Dehnung. Da im Allgemeinen die durch die Dehnung des Dehnungsmessstreifens infolge der Durchbiegung des Lastmessbolzens hervorgerufene Widerstandsänderung sehr klein ist, wird eine Wheatstonsche Brückenschaltung zur Umwandlung der Widerstands- in eine Spannungsänderung verwendet. Das bedeutet, dass über den Stecker 3 eine Speisespannung in die Wheatstonsche Brücke, die mit dem aktiven Dehnungsmessstreifen und drei weiteren Festwiderständen im Inneren des Lastmessbolzens 1 angeordnet ist, eingespeist und ebenfalls über den Stecker 3 eine Messspannung ausgekoppelt werden kann, wobei der Wert der Messspannung ein Maß für die Durchbiegung des Lastmessbolzens 1 bei Krafteinwirkung ist. Diese am Stecker 3 anliegende Messspannung kann in einer nachgeschalteten Auswerteeinheit ausgewertet, weiterverarbeitet und ggf. angezeigt werden. Anstelle des Einsatzes eines Steckers am Ende des Lastmessbolzens ist es selbstverständlich auch denkbar, unter Weglassung eines Steckers Spannungen und Signale über Kabel zu übertragen.

### Bezugszeichenliste

- 1.: Lastmessbolzen
- 2.: Längsachse
- 3.: Stecker
- 4.: Innenlager
- 5.: linkes Außenlager
- 6.: rechtes Außenlager
- 7.: Bolzenhalter
- 8.: Messnut
- 9.: Messnut

- 40.: Innenlager
- 50.: linkes Außenlager
- 60.: rechtes Außenlager
NL: Nennlast (Messrichtung) GR: Gegenrichtung
B: Breite
D: Durchmesser

## Patentansprüche

1. Lastmessbolzen (1) zur Messung von Lasten oder Kräften, wobei der Lastmessbolzen (1) mittels eines Innenlagers (40) und Außenlagern (50, 60) drehbar gelagert ist und eine Messvorrichtung aufweist, die aufgrund der auf den Lastmessbolzen (1) einwirkenden Lasten oder Kräften eine Durchbiegung erfasst und in Abhängigkeit dessen ein elektrisches Signal erzeugt, wobei zur gezielten Durchbiegung des Lastmessbolzens (1) zwischen dem Innenlager (40) und den Außenlagern (50, 60) Messnuten (8, 9) im Lastmessbolzen (1) vorgesehen sind, **dadurch gekennzeichnet, dass** sich das Außenlager (50, 60) in Längsrichtung in Richtung des Innenlagers (40) zumindest teilweise über die Messnut (8, 9) erstreckt und in dem Bereich, in dem sich das Außenlager (50, 60) über die Messnut (8, 9) erstreckt, der Durchmesser des Außenlagers (50, 60) für den Lastmessbolzen (1) teilweise gleich und teilweise größer ist als der Außendurchmesser des Lastmessbolzens (1).

2. Lastmessbolzen (1) nach Anspruch 1, **dadurch gekennzeichnet, dass** sich der Innendurchmesser des Außenlagers (50, 60) in Längsrichtung in Richtung des Innenlagers (40) kontinuierlich aufweitet.

3. Lastmessbolzen (1) nach Anspruch 1, **dadurch gekennzeichnet, dass** sich der Innendurchmesser des Außenlagers (50, 60) in Längsrichtung in Richtung des Innenlagers (40) sprunghaft aufweitet.

4. Lastmessbolzen (1) nach Anspruch 1, 2 oder 3, **dadurch gekennzeichnet, dass** unterhalb einer gedachten Ebene, die durch eine Längsachse (2) des Lastmessbolzens (1) verläuft, über die gesamte Breite B₅₀ (analog auch B₆₀) des Außenlagers (50, 60) der Durchmesser D₁ so gewählt ist, dass er immer gleich bleibt über den Verlauf der Erstreckung des Außenlagers (50, 60) über die jeweilige Breite, und oberhalb der gedachten Ebene, die durch die Längsachse (2) verläuft, sich die Öffnung der Bohrung für den Lastmessbolzen (1) vom Durchmesser D₁ hin zum Durchmesser D₂ aufweitet.

5. Lastmessbolzen (1) nach Anspruch 2, 3 oder 4, **dadurch gekennzeichnet, dass** sich der Innendurchmesser des Außenlagers (50, 60) in Längsrichtung in Richtung des Innenlagers (40) oberhalb der durch die Längsachse (2) verlaufende gedachten Ebene trompeten- oder ellipsenförmig aufweitet.
